# EUROPÄISCHE PATENTSCHRIFT

(11) **EP 2 593 291 B1**
(45) Veröffentlichungstag und Bekanntmachung des Hinweises auf die Patenterteilung: **22.10.2014**
(21) Anmeldenummer: 11735830.9
(22) Anmeldetag: 06.07.2011
(51) Int. Cl.: B29C 65/08, B23K 20/10

(54) **TORSIONSSONOTRODE UND ULTRASCHALLSCHWEISSVERFAHREN UNTER VERWENDUNG EINER TORSIONSSONOTRODE**
TORSION SONOTRODE AND ULTRASONIC WELDING PROCESS USING A TORSION SONOTRODE
SONOTRODE À TORSION ET PROCÉDÉ DE SOUDAGE PAR ULTRASONS AVEC UTILISATION D'UNE SONOTRODE À TORSION

(30) Priorität: 12.07.2010 DE 102010031258
(43) Veröffentlichungstag der Anmeldung: 22.05.2013
(73) Patentinhaber: Telsonic Holding AG, 9552 Bronschhofen (CH)
(72) Erfinder: REGENBERG, Claus, 90513 Zirndorf (DE); LANG, Georg, 97855 Triefenstein (DE)
(74) Vertreter: Gassner, Wolfgang
(86) Internationale Anmeldenummer: PCT/EP2011/061363
(87) Internationale Veröffentlichungsnummer: WO 2012/007325

(56) Entgegenhaltungen:
- EP-A1- 1 410 988
- EP-A1- 1 685 919
- EP-A1- 1 930 148
- EP-A2- 0 242 480
- US-A- 4 956 213

## Beschreibung

Die Erfindung betrifft eine Torsionssonotrode nach dem Oberbegriff des Anspruchs 1. Sie betrifft ferner ein Ultraschallschweißverfahren unter Verwendung einer solchen Torsionssonotrode.

Eine derartige Torsionssonotrode ist beispielsweise aus der EP 1 930 148 A1 bekannt. Dabei weist eine Kontaktfläche zur Übertragung einer um eine Torsionsachse gerichteten Torsionsschwingung auf ein zu verschweißendes Bauteil eine Ringscheibenform mit einer Hirthverzahnung auf, wobei auf der Kontaktfläche Erhebungen in Form von radialen Rippen vorgesehen sind. Weiterhin wird eine gitternetzartige Anordnung der Rippen offenbart.

Aus der US 4,956,213 ist eine Sonotrode bekannt, deren Kontaktfläche radiale Rippen aufweist.

Die EP 0 242 480 A2 offenbart eine Sonotrode mit einer schräg zur Sonotrodenachse verlaufenden Kontaktfläche. Die Kontaktfläche weist Vorsprünge mit trapezförmiger Querschnittsfläche auf.

Die EP 1 410 988 A1 betrifft eine Torsionssonotrode, bei der eine Kontaktfläche zur Übertragung einer um eine Torsionsachse gerichteten Torsionsschwingung auf ein zu verschweißendes Bauteil mit linienartigen Einkerbungen versehen ist. Die Einkerbungen weisen einen V-förmigen Kerbgrund auf; sie können gitternetzartig ausgeführt sein.

Bei Verwendung einer solchen Torsionssonotrode tritt mitunter das Problem auf, dass ein Teil der auf das Bauteil zu übertragenden Energie verloren geht. Das kann dazu führen, dass das Bauteil nicht mit der gewünschten Festigkeit an ein weiteres Bauteil angeschweißt wird. Ferner kann es dazu kommen, dass das Bauteil an seiner der Kontaktfläche gegenüberliegenden Oberfläche mit der Kontaktfläche verschweißt oder dass die Oberfläche des Bauteils schmilzt.

Aufgabe der Erfindung ist es, die Nachteile nach dem Stand der Technik zu beseitigen. Es soll insbesondere eine Torsionssonotrode angegeben werden, mit der Schweißverbindungen mit einer reproduzierbaren Festigkeit herstellbar sind. Nach einem weiteren Ziel der Erfindung soll ein Ultraschallschweißverfahren angegeben werden, mit dem Schweißverbindungen gleichbleibender Festigkeit herstellbar sind.

Diese Aufgabe wird durch die Merkmale der Ansprüche 1 und 8 gelöst. Zweckmäßige Ausgestaltungen der Erfindung ergeben sich aus den Merkmalen der Ansprüche 2 bis 7 und 9.

Nach Maßgabe der Erfindung wird vorgeschlagen, dass sich von der Anschlagfläche inselartig ausgebildete Erhebungen mit einer spitz zulaufenden pyramidalen Form erstrecken, welche durch ebene Abschnitte der Anschlagfläche von einander beabstandet sind. Damit wird eine hervorragende Übertragung der Ultraschall-Schwingungsenergie von der Kontaktfläche auf das Bauteil erreicht. Durch den beim Ultraschallschweißen verwendeten Schweißdruck werden die inselartigen und spitz zulaufenden Erhebungen in das Bauteil eingedrückt, so dass eine formschlüssige Verbindung zwischen der Kontaktfläche und dem Bauteil erreicht wird. Durch die zwischen den Erhebungen vorgesehene senkrecht zur Torsionsachse verlaufende ebene Anschlagsfläche ergibt sich eine definierte Eindringtiefe der Erhebungen in das Bauteil. Damit können Ultraschallschweißverbindungen mit gleichbleibender Festigkeit hergestellt werden.

Nach einer vorteilhaften Ausgestaltung beträgt ein Abstand zwischen zwei benachbarten Erhebungen 0,4 bis 2,0 mm, vorzugsweise 0,5 bis 1,0 mm. D. h. die Erhebungen sind - im Gegensatz zum Stand der Technik - nicht nur durch Einkerbungen mit einem V-förmigen Kerbgrund, sondern durch ebene Abschnitte der Anschlagfläche voneinander beabstandet. Das ermöglicht stets ein vollständiges Eindringen der Erhebungen in das Bauteil.

Eine Gesamtgrundfläche sämtlicher Erhebungen ist kleiner als die Anschlagfläche. Unter dem Begriff "Gesamtgrundfläche" wird die Summe der Grundflächen der Erhebungen verstanden. Die Grundfläche einer Erhebung ist durch die Schnittlinie/n der die Erhebung begrenzenden Seitenflächen/n mit der Anschlagfläche umgrenzt. Dabei liegt ein Verhältnis von Anschlagfläche zu Gesamtgrundfläche im Bereich von 2,0 bis 5,5. Hinsichtlich der Verteilung der Erhebungen auf der Kontaktfläche hat es sich als zweckmäßig erwiesen, dass diese entlang zumindest zweier sich unter einem vorgegebenen Winkel schneidender Geraden angeordnet sind. Die Geraden können sich in einem vorgegebenen Winkel von 30 bis 90°, vorzugsweise 60 oder 90°, schneiden. Nach einer alternativen Ausgestaltung der Erfindung können die Erhebungen bezüglich der Torsionsachse auch entlang radial verlaufender Geraden angeordnet sein.

Die Erhebungen weisen eine pyramidale Form auf. Die Erhebungen können insbesondere die Form einer drei- oder vierseitigen Pyramide aufweisen. In diesem Fall entspricht eine Grundfläche einer Erhebung also einem Drei- oder Viereck, insbesondere einem gleichzeitigen Dreieck oder einem Quadrat.

Des Weiteren hat es sich als zweckmäßig erwiesen, dass die Pyramidenflächen der Pyramiden mit der Anschlagfläche einen Neigungswinkel von 50 bis 80°, vorzugsweise 65 bis 75°, bilden. D. h. die Pyramiden werden vorteilhafterweise also von relativ steilen Pyramidenflächen begrenzt.

Nach weiterer Maßgabe der Erfindung wird ein Ultraschallschweißverfahren mit folgenden Schritten vorgeschlagen:
Bereitstellen einer erfindungsgemäßen Torsionssonotrode,
Eindrücken der Erhebungen in einen mit der Kontaktfläche in Berührung befindlichen Abschnitt eines zu verschweißenden Bauteils bis die Anschlagfläche am Bauteil anliegt, wobei eine maximale Höhe der Erhebungen kleiner als eine Dicke des mit der Kontaktfläche in Berührung befindlichen Abschnitts des Bauteils ist, und
Verschweißen des Bauteils mittels Torsions-Ultraschallschweißen mit einem damit in Kontakt befindlichen weiteren Bauteil.

Nach dem erfindungsgemäßen Verfahren dringen beim Aufbringen des Schweißdrucks die Erhebungen in das Bauteil lediglich bis zu einer Tiefe ein, welche durch die maximale Höhe der Erhebungen gegenüber der Anschlagfläche gegeben ist. Die Eindringtiefe ist kleiner als die Dicke des mit der Kontaktfläche in Berührung befindlichen Abschnitts des zu verschweißenden Bauteils. Die Erhebungen durchdringen das Bauteil also nicht. Sie erstrecken sich insbesondere nicht bis in den Bereich einer Schweißfläche zwischen dem Bauteil und dem weiteren Bauteil.

Zweckmäßigerweise ist die maximale Höhe der Erhebungen kleiner als das 0,5-Fache der Dicke des zu verschweißenden Bauteils. D. h. die Erhebungen dringen beim Aufbringen des Schweißdrucks also höchstens bis zur Hälfte der Dicke des zu verschweißenden Bauteils ein.

Nachfolgend werden Ausführungsbeispiele der Erfindung anhand der Zeichnungen näher erläutert. Es zeigen:
- Fig. 1: eine perspektivische Ansicht einer ersten Torsionssonotrode,
- Fig. 2: eine vergrößerte Detailansicht gemäß Fig. 1,
- Fig. 3: einen vergrößerten Ausschnitt gemäß Fig. 2,
- Fig. 4: schematisch die Anordnung von Erhebungen bei einer zweiten Torsionssonotrode und
- Fig. 5: eine Schnittansicht durch eine mit einem Bauteil in Kontakt befindliche Torsionssonotrode.

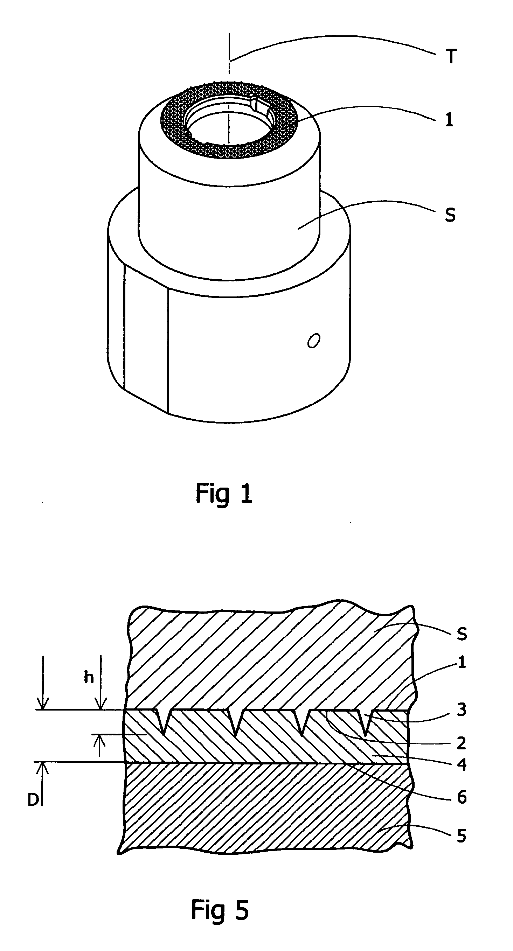

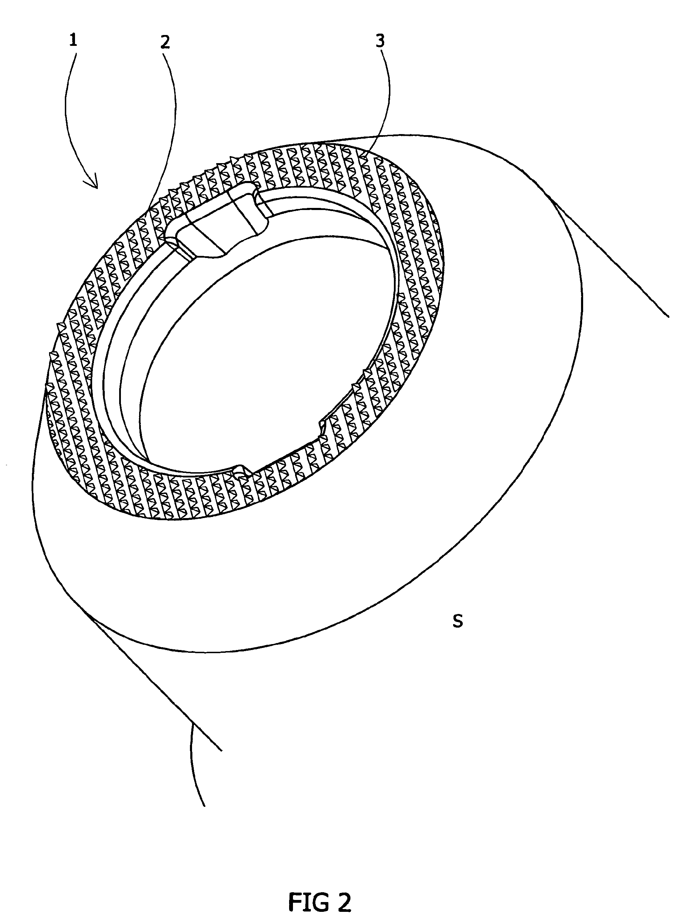

Fig. 1 bis 3 zeigen Ansichten einer ersten Torsionssonotrode S, welche eine im Wesentlichen ringförmig ausgestaltete Kontaktfläche 1 aufweist. Die Kontaktfläche 1 ist weitgehend rotationssymmetrisch bezüglich einer mit dem Bezugszeichen T bezeichneten Torsionsachse, um welche die Torsionssonotrode S im Betrieb hin und her schwingt. Wie insbesondere aus Fig. 2 ersichtlich ist, ist die Kontaktfläche 1 aus einer senkrecht zur Torsionsachse T verlaufenden ebenen Anschlagfläche 2 und davon sich erstreckenden inselartigen Erhebungen 3 gebildet. Die Erhebungen 3 sind vorteilhafterweise einstückig mit der Torsionssonotrode S hergestellt. Die Herstellung der Erhebungen 3 kann durch Fräsen oder Schleifen erfolgen.

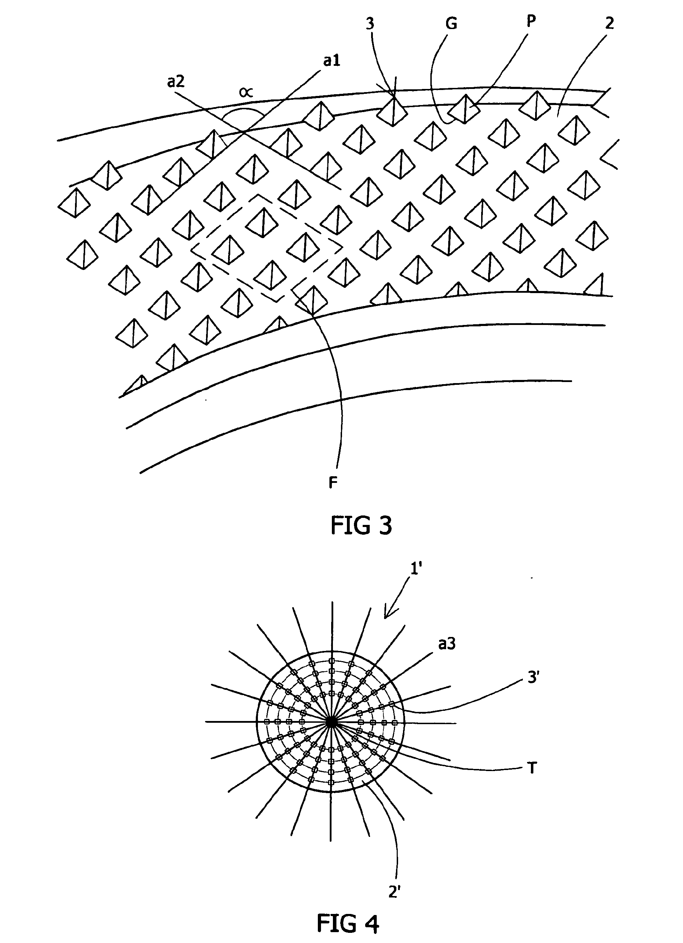

Wie aus Fig. 3 ersichtlich ist, sind die spitz zulaufenden Erhebungen 3 aus vierseitigen Pyramiden gebildet. Eine erste Kante einer Grundfläche G der Pyramiden verläuft parallel zu einer ersten Gerade a1. Eine zweite Kante der Grundfläche G verläuft parallel zu einer zweiten Geraden a2. Die erste und die zweite Gerade a1, a2 schneiden sich hier unter einem Winkel α von 90°. Die Geraden A1, A2 verlaufen vorteilhafterweise jeweils parallel zueinander. Ein Abstand zwischen zwei benachbarten parallelen Geraden A1, A2 ist vorteilhafterweise jeweils gleich. Insbesondere ist es zweckmäßig, dass ein Abstand zwischen den parallelen Geraden A1 bzw. A2 größer ist als eine Länge einer die Grundfläche der Pyramiden begrenzenden Grundlinie.

Wie insbesondere aus den mit unterbrochenen Linien begrenzten Feld F ersichtlich ist, ist eine Summe der Grundfläche G bzw. eine Gesamtgrundfläche der im Feld F befindlichen vier Pyramiden deutlich kleiner als der sie umgebende Abschnitt der Anschlagfläche 2. Im vorliegenden Beispiel beträgt das Verhältnis von Gesamtgrundfläche zur Anschlagfläche 2 etwa 1:5. Pyramidenflächen P der Pyramiden bilden hier mit der Anschlagfläche 2 einen Neigungswinkel von 65 bis 75°.

Fig. 4 zeigt eine Draufsicht auf eine weitere Kontaktfläche 1' einer zweiten Torsionssonotrode. Die weitere Kontaktfläche 1' ist rund ausgebildet. Eine Anschlagfläche ist hier mit dem Bezugszeichen 2' bezeichnet. Sich von der Anschlagfläche 2' erstreckende Erhebungen 3' liegen hier auf radial bezüglich der Torsionsachse T orientierten Geraden a3.

Die Erhebungen 3, 3' können auch in Form dreiseitiger Pyramiden oder in kegeliger Form ausgestaltet sein.

Nunmehr wird die Funktion der vorgeschlagenen Torsionssonotrode anhand der Fig. 5 näher erläutert.

In Fig. 5 liegt die Kontaktfläche 1 der Torsionssonotrode S an einem zu verschweißenden Bauteil 4 an. Dabei kann es sich beispielsweise um ein aus Kunststoff oder Metall, insbesondere Aluminium, hergestelltes Bauteil handeln. Mit dem Bezugszeichen 5 ist ein weiteres Bauteil bezeichnet, an welches das Bauteil 4 anzuschweißen ist. Auch das weitere Bauteil kann aus Kunststoff oder Metall, insbesondere Aluminium, hergestellt sein.

Wie aus Fig. 5 ersichtlich ist, dringen die Erhebungen 3 bei Aufbringen des zur Herstellung einer Ultraschallschweißverbindung erforderlichen Schweißdrucks in das Bauteil 4 ein, bis die Anschlagfläche 2 am Bauteil 4 anliegt. Eine maximale Eindringtiefe der Erhebungen 3 ist durch eine Höhe h zwischen der Anschlagfläche 2 und der Spitze der Erhebungen 3 gegeben. Die Höhe h ist kleiner als eine Dicke D, welches das Bauteil 4 im Bereich der Kontaktfläche 1 aufweist. D. h. die Erhebungen 3 dringen im Bereich der Kontaktfläche 1 also nur in das Bauteil 4 ein. Sie durchbringen das Bauteil 4 allerdings nicht bis zu einer der Kontaktfläche 1 gegenüberliegenden Schweißfläche 6, welche sich zwischen dem Bauteil 4 und dem weiteren Bauteil 5 befindet.

Wegen der inselartigen Ausgestaltung der spitz zulaufenden Erhebungen 3 und der dazwischen vorgesehenen ebenen Anschlagfläche 2 dringen die Erhebungen 3 bei Aufbringen des Schweißdrucks immer bis zur selben Tiefe in das Bauteil 4 ein. Damit wird ein reproduzierbarer formschlüssiger Kontakt zwischen der Torsionssonotrode S und dem Bauteil 4 hergestellt. Es wird damit gewährleistet, dass die von der Torsionssonotrode S auf das Bauteil 4 übertragene Leistung weitgehend vollständig in die Schweißfläche 6 eingeleitet wird. Infolgedessen bildet sich eine Schweißfläche 6 mit reproduzierbarer Festigkeit aus.

### Bezugszeichenliste

- 1, 1': Kontaktfläche
- 2, 2': Anschlagfläche
- 3, 3': Erhebung
- 4: Bauteil
- 5: weiteres Bauteil
- 6: Schweißfläche

- a1, a2, a3: Gerade
- D: Dicke
- F: Feld
- G: Grundfläche
- h: Höhe
- P: Pyramidenflächen
- S: Torsionssonotrode
- T: Torsionsachse

## Patentansprüche

1. Torsionssonotrode (S) mit einer Kontaktfläche (1, 1') zur Übertragung einer um eine Torsionsachse (T) gerichteten Torsionsschwingung auf ein zu verschweißendes Bauteil (4), wobei die Kontaktfläche (1, 1') eine im Wesentlichen senkrecht zur Torsionsachse (T) verlaufende ebene Anschlagfläche (2, 2') aufweist,
**dadurch gekennzeichnet, dass** sich von der Anschlagfläche (2, 2') inselartig ausgebildete Erhebungen (3, 3') mit einer spitz zulaufenden pyramidalen Form erstrecken, welche durch ebene Abschnitte der Anschlagfläche (2, 2') voneinander beabstandet sind, und dass ein Verhältnis von Anschlagfläche (2, 2') zu einer Gesamtgrundfläche sämtlicher Erhebungen im Bereich von 2,0 bis 5,5 liegt.

2. Torsionssonotrode nach Anspruch 1, wobei ein Abstand zwischen zwei benachbarten Erhebungen (3, 3') 0,4 bis 2,0 mm, vorzugsweise 0,5 bis 1,0 mm, ist.

3. Torsionssonotrode nach einem der vorhergehenden Ansprüche, wobei die Erhebungen (3, 3') entlang zumindest zweier sich unter einem vorgegebenen Winkel α schneidender Geraden (a1, a2) angeordnet sind.

4. Torsionssonotrode nach Anspruch 3, wobei der vorgegebenen Winkel α 30 bis 90°, vorzugsweise 60 oder 90°, beträgt.

5. Torsionssonotrode nach einem der vorhergehenden Ansprüche, wobei die Erhebungen (3, 3') bezüglich der Torsionsachse (T) entlang radial verlaufender Geraden (a3) angeordnet sind.

6. Torsionssonotrode nach einem der vorhergehenden Ansprüche, wobei die Erhebungen (3, 3') die Form einer drei- oder vierseitigen Pyramide aufweisen.

7. Torsionssonotrode nach einem der vorhergehenden Ansprüche, wobei Pyramidenflächen (P) der Pyramiden mit der Anschlagfläche (2, 2') einen Neigungswinkel von 50 bis 80°, vorzugsweise 65 bis 75°, bilden.

8. Ultraschallschweißverfahren mit folgenden Schritten:
Bereitstellen einer Torsionssonotrode (S) nach einem der vorhergehenden Ansprüche,
Eindrücken der Erhebungen (3, 3') in einen mit der Kontaktfläche (1, 1') in Berührung befindlichen Abschnitt eines zu verschweißenden Bauteils (4) bis die Anschlagfläche (2) am Bauteil (4) anliegt, wobei eine maximale Höhe (h) der Erhebungen (3, 3') kleiner als eine Dicke (D) des mit der Kontaktfläche (1, 1') in Berührung befindlichen Abschnitts des Bauteils (4) ist, und
Verschweißen des Bauteils (4) mittels Torsions-Ultraschallschweißen mit einem damit in Kontakt befindlichen weiteren Bauteil (5).

9. Ultraschallschweißverfahren nach Anspruch 8, wobei die maximale Höhe (h) der Erhebungen (3, 3') kleiner als das 0,5-Fache der Dicke (D) des zu verschweißenden Bauteils (4) ist.

## Claims

1. A torsion sonotrode (S) having a contact surface (1, 1') for transferring a torsional oscillation directed about a torsion axis (T) onto a component (4) to be welded, wherein the contact surface (1, 1') has a flat stop surface (2, 2') extending substantially perpendicular to the torsion axis (T),
**characterized in that** from the stop surface (2, 2') projections (3, 3') of insular design extend with a pointed shape, said projections being separated from one another by flat sections of the stop surface (2, 2'), and that a ratio of stop surface (2, 2') to a total base area of all projections is in the range of 2.0 to 5.5.

2. The torsion sonotrode according to claim 1, wherein a distance between two adjacent projections (3, 3') is 0.4 to 2.0 mm, preferably 0.5 to 1.0 mm.

3. The torsion sonotrode according to one of the preceding claims, wherein the projections (3, 3') are disposed along at least two straight lines (a1, a2) intersecting at a specified angle α.

4. The torsion sonotrode according to claim 3, wherein the specified angle α is 30 to 90°, preferably 60 or 90°.

5. The torsion sonotrode according to one of the preceding claims, wherein the projections (3, 3') are disposed with respect to the torsion axis (T) along radially extending straight lines (a3).

6. The torsion sonotrode according to one of the preceding claims, wherein the projections (3, 3') have the shape of a three- or four-sided pyramid.

7. The torsion sonotrode according to one of the preceding claims, wherein pyramidal surfaces (P) of the pyramid form an angle of inclination with the stop surface (2, 2') of 50 to 80°, preferably 65 to 75°.

8. An ultrasonic welding process having the following steps:
provide a torsion sonotrode (S) according to one of the preceding claims,
press the projections (3, 3') into a section of a component (4) to be welded, said section touching the contact surface (1, 1'), until the stop surface (2) rests on the component (4), wherein a maximum height (h) of the projections (3, 3') is less than a thickness (D) of the section of the component (4) touching the contact surface (1, 1'), and
weld the component (4) by way of torsion ultrasonic welding to a further component (5) in contact therewith.

9. The ultrasonic welding process according to claim 8, wherein the maximum height (h) of the projections (3, 3') is less than 0.5-fold the thickness (D) of the component (4) to be welded.

## Revendications

1. Sonotrode à torsion (S) comprenant une surface de contact (1, 1') pour le transfert d'une vibration de torsion, orientée autour d'un axe de torsion (T), sur une pièce à souder (4), la surface de contact (1, 1') présentant une surface de butée (2, 2') plane sensiblement perpendiculaire à l'axe de torsion (T),
**caractérisée en ce qu'**à partir de la surface de butée (2, 2') s'avancent des protubérances (3, 3') réalisées en îlot, de forme pyramidale se terminant en pointe, qui sont espacées les unes des autres par des segments plans de la surface de butée (2, 2'), et qu'un rapport entre la surface de butée (2, 2') et la surface de base totale de toutes les protubérances est dans une plage comprise entre 2,0 et 5,5.

2. Sonotrode à torsion selon la revendication 1, où un intervalle entre deux protubérances (3, 3') adjacentes est entre 0,4 et 2,0 mm, de préférence entre 0,5 et 1,0 mm.

3. Sonotrode à torsion selon l'une des revendications précédentes, où les protubérances (3, 3') sont disposées le long d'au moins deux droites (a1, a2) sécantes à un angle prédéfini α.

4. Sonotrode à torsion selon la revendication 3, ou l'angle prédéfini α est de 30 à 90°, de préférence de 60 ou 90°.

5. Sonotrode à torsion selon l'une des revendications précédentes, où les protubérances (3, 3') par rapport à l'axe de torsion (T) sont disposées le long de droites radiales (a3).

6. Sonotrode à torsion selon l'une des revendications précédentes, où les protubérances (3, 3') présentent la forme d'une pyramide à trois ou quatre côtés.

7. Sonotrode à torsion selon l'une des revendications précédentes, où des surface pyramidales (P) des pyramides forment un angle d'inclinaison de 50 à 80°, de préférence de 65 à 75°, avec la surface de butée (2, 2').

8. Procédé de soudage par ultrasons comprenant les opérations suivantes:
mettre à disposition une sonotrode à torsion (S) selon l'une des revendications précédentes,
enfoncer les protubérances (3, 3') dans un segment d'une pièce à souder (4), ledit segment étant en contact avec la surface de contact (1, 1'), jusqu'à alignement de la surface de butée (2) sur la pièce (4), où une hauteur maximale (h) des protubérances (3, 3') est inférieure à une épaisseur (D) du segment de la pièce (4) en contact avec la surface de contact (1, 1'), et
souder la pièce (4) au moyen d'un soudage par ultrasons torsionnel avec une autre pièce (5) en contact avec celle-ci.

9. Procédé de soudage par ultrasons selon la revendication 8, où la hauteur maximale (h) des protubérances (3, 3') est inférieure à 0,5 fois l'épaisseur (D) de la pièce (4) à souder.
